# EUROPEAN PATENT SPECIFICATION

(11) **EP 0 267 777 B1**
(45) Date of publication and mention of the grant of the patent: **13.01.1993**
(21) Application number: 87309924.6
(22) Date of filing: 10.11.1987
(51) Int. Cl.: G11B 5/55, G11B 21/08, H02P 8/00

(54) **Bipolar motor control**
Kontrolle für bipolaren Motor
Contrôle de moteur bipolaire

(30) Priority: 10.11.1986 US 929559
(43) Date of publication of application: 18.05.1988
(73) Proprietor: SEAGATE TECHNOLOGY, INC., Scotts Valley, California 95066-4544 (US)
(72) Inventor: Krause, James Norman, Morgan Hill California 95037 (US); Tremaine, Brian Paul, San Jose California 95148 (US)
(74) Representative: Bayliss, Geoffrey Cyril

(56) References cited:
- EP-A- 0 191 247
- US-A- 3 562 725
- US-A- 4 530 020

## Description

This invention pertains to a servo control system for use in a magnetic disc storage device, and more particularly one that utilizes a novel arrangement of control stepper motor windings to position a data head relative to a data track on the disc, and to position the data head over the track centerline on the disc.

Disc storage devices are used in data processing systems for storing relatively large amounts of information that can generally be accessed in milliseconds. Structurally, a typical storage device comprises a rotating magnetizable disc medium having several surfaces, in the form of an assembly of one or more stacked platters, on which data is magnetically sensed and/or recorded in addressable sectors located on circular data track centerlines. The disc assembly is mounted on a drive spindle in the storage device that rotates at a constant high speed. The storage device also includes one or more transducers or read/write heads, associated with each surface of the disc. The transducers are mounted in spaced relation on an arm of a movable transducer carriage. The servo controller actuates the carriage in a controlled fashion to move all the data heads in unison radially over the disc surfaces to position any one of the data heads over a selected track centerline. Since all the data heads on the carriage move together, the device also includes control circuitry that selects one of the read/write heads to perform a data transfer operation.

The servo controller responds to commands from the data processing system. The controller does this by transforming those commands into an analog servo signal which ultimately drives, usually through a power amplifier, an electromechanical actuator that connects to the transducer carriage. Typically, the disc device operates in one of two modes. The first (usually open-loop) is a mode in which the carriage, and thus the selected data head, is driven to the vicinity of the desired circular track centerline. Once that data head reaches that vicinity, the system is switched to a track following (or closed-loop, servo controlled) mode. In the track following mode, the position of the actuator or carriage is servo controlled to cause the center of the selected data head to align itself with the centerline of the data track.

To minimize alignment error, servo systems typically employ formatting information prerecorded on the data disc to allow the controller to detect the displacement between the data head and the track centerline. A format might include servo data that is continuously pre-recorded along servo tracks on a dedicated surface of the disc assembly (dedicated servo data) together with servo data prerecorded in circumferentially spaced servo sectors interspersed, or embedded between adjacent pairs of storage data sectors on a data surface of the disc assembly (embedded servo data). Dedicated servo data is typically read by a read-only servo head, while embedded servo data is read along with the data by a read/write head, and thereafter separated from the data by servo data processing circuitry.

The servo data from both the dedicated and data surfaces is decoded by the disc controller, thereby enabling it to modify a servo control signal, if necessary, and thus continuously maintain the position of the data head in alignment with the selected data track centerline.

However, several factors limit the alignment accuracy and thus, the maximum attainable data track density, of a disc storage device. The most common of these factors stem from electrical and mechanical disturbances, or noise. DC bias forces and electrical offsets are examplesof some disturbances. A notable mechanical disturbance is spindle runout, or wobble, which is the difference between the actual centerline of a track and the effective centerline presented to a head positioned a fixed distance from the mounting center of the disc. It is typically caused by slight eccentricity in the mounting of the disc on a drive spindle. Runout occurs in disc systems using exchangeable disc cartridges and results from even the slightest off-center mounting (e.g., a fraction of a thousandth of an inch or a fraction of a thousandth of 2.54 cm) as well as from slippage or tilt in seating of the disc cartridge after mounting. Carriage play between the transducer carriage and its guide rods, as well as disalignment due to uneven thermal expansion of the carriage, arms, disc or transducers further contribute to the mechanical disturbances. Generally, positioning tolerances should be within ±10% maximum of track pitch, i.e. the spacing between adjacent track centerlines). Thus, for example, a 1000 track-per-inch (or 1000 track-per-2.54 cm) servo system should maintain a data head within ±100 microinches or 2.54 x 10⁻⁶ cm of a data track centerline. With typical currently available exchangeable disc systems, such alignment accuracy is not easily obtainable.

Control system lag is another factor that effects positioning accuracy. Lag is the time delay between the time the controller detects an off-track condition and the time the actuator begins to move the transducer into alignment with the data track centerline. Some of this delay is attributable to the electrical response characteristics of the servo control system, as, for example, resulting from a low sampling rate; the remaining delay is attributable to the mechanical response characteristics of the electromechanical actuator. Such delays characterize the band width of the servo control system. The greater the band width, the faster the positioning system can respond to an off-track condition, thereby providing tightly controlled positioning of the data head. A positioning system having high band width provides increased data track density because centerlines can be followed within a smaller tolerance. There are other factors that contribute to misalignment during track following operations.

Conventional methods of increasing servo band width include increasing the frequency of structural mechanical resonances, providing continuous position feedback from a dedicated servo surface, and providing a higher sample rate position feedback emanating from the data surfaces.

An approach for overcoming some of the effects of the electrical and mechanical disturbances has been to improve the tolerances of the mechanical and electrical circuit components of the servo system. However, this is an expensive proposition and is only marginal at best in solving the problems. Servo compensation networks have also been used to reduce head misalignment resulting from uneven thermally induced dimension or position changes of the mechanical components. This approach only partially corrects misalignment errors of the transducer because it is based on a model that attempts to correct only some of the average offset errors, but not the runout errors.

A number of approaches have been disclosed for improving head alignment electronically. One approach has been to provide sectorized, or embedded, servo positioning data on the data storage track, as an alternative to or in supplement to servo positioning information on a dedicated disc surface. However, this approach does not overcome band width limitations. Another approach has been to use a transducer positioned at a radially fixed stationary reference point over a position reference track on the rotating disc to detect misposition error signals. However, this also does not provide an optimum result, because it lacks face compensation, noise reduction, or a close fixed relationship to the peculiarities of positioning of the actual track being read.

Another approach has been to derive misposition error signal from a course positioner on the transducer carriage rather than the disc medium. Again, noise reduction and iteration are lacking in such a system.

Another approach has been to provide first and second sets of servo signals on a data surface recorded in alternate track locations at centerlines shifted radially by the width of one half track with respect to the centerlines of the storage data tracks. However, the approach to using this information is to make several passes over the information and store a set of misposition error signals so that the correction signals can be utilized during subsequent read/write operations. This system must use considerable processing hardware and memory space for storing the information. Moreover, it is incapable of dynamically correcting for modifications that may occur during the use of the system.

The other critical limitation in accurate positioning systems is the arrangement and sequence of energization of the motor coils. Although motors with multiple phases have become well known to produce greater numbers of steps with high torque, the critical feature now has become the control circuitry to switch the currents to the coils. Such circuitry is typically quite complex, and is incapable of providing the desired number of steps per electrical revolution.

US-A-4,530,020 discloses a runout correction pattern recorded on the peripheral track of the disk during initial recording of the data stored thereon. The runout correction pattern comprises an integer number of sequentially recorded groups, each comprised of an increment of full track erasure, a like increment of high transition density automatic gain control information, a first burst of servo control information, and a second burst of servo control information. The bursts of servo control information are recorded "off-track" by one-half of the center line to center line spacing between adjacent tracks so that all first bursts are to one side of the center line of the track and all second bursts are the opposite side of the center line of the track. Decoding of the runout correction patterns by a positionally fixed playback transducer establishes runout correction information which may be provided to control, as a function of rotational angle of the disk, the servo mechanism adjusting the playback transducer position during playback of the data stored on the disk.

US-A-3,562,725 discloses an arrangement for coarse and fine positioning of magnetic read heads in which electric currents through the stator windings of a magnetic detent motor are altered in phase relationship to a effect coarse positioning of magnetic read-write heads which are coupled mechanically to said magnetic detent motor and altered in amplitude in response to a feedback signal in order that the rotor of the detent motor can be relocated by small increments, i.e. small distances.

This invention provides a disc drive system comprising a data storage medium in the form of a disc having a plurality of data storage tracks, each one of said tracks having a centerline, the centerlines of adjacent tracks being spaced a fixed track space distance, said medium further including servo sectors and servo data in said sector including a plurality of first servo data bursts stored at a position on one side of said data track centerline and one-half said track space distance from said centerline, and a plurality of second servo data bursts stored at the other side of said data track centerline and one-half of said track space distance from said centerline, positionable access means for reading said servo tracks and said data tracks and for generating servo signals representing said first and second servo data bursts, said access means including a transducer for accessing said servo and data information, and a motor driven actuator for supporting and positioning said transducer; wherein the drive motor for the actuator is a stepper motor having a plurality of stator coils subject to selective simultaneous energization at full current with currents of selected polarities of all or all but one or two of said coils for defining a plurality of motor detent positions, said servo data being located at positions defined by said motor detent positions, said data track being reached by said transducer by applying approximately one-half of said full energization current amount to said one coil not energized to reach said motor detent servo track position, the motor detent position on the other side of said track centerline being reached by energization of all said coils with currents of selected polarities.

For example said servo data burst is recorded in wedge-shaped sectors on the surface of said disc, said sectors including said first and second servo data bursts.

More specifically each said wedge-shaped sector may includes a synchronizing signal at a leading edge of said sector relative to the direction of travel of said transducer and aligned with said data track centerline, said drive including control means for detecting said synchronizing signal and for reading said first and second servo data bursts for positioning said transducer over said data track.

In any of the above arrangements means may be provided for simultaneously energizing all or all but one of said coils to move said motor to a selected one of said detent positions, and data track position control means for applying approximately one-half full current amount to the one of said coils which is not used to define a servo track detent position on one side of said data track, said one-half current positioning said transducer over said data track.

In the latter case said control means may include first means for reading said servo data burst, and means for modulating said one-half current into said coil in response to said servo burst read by said control means to centre said transducer over said data track.

Further said control means may include means for reading said servo information from two motor detent positions on opposite sides of said desired data track, said transducer being centered over said data track midway between said detent positions.

In one specific arrangement said stepper motor may comprise ten coils adjacent detent positions of said stepper motor being reached by energizing said ten coils or eight of said coils, the data track position intermediate said adjacent detent positions being reached by energizing a single positioning coil whose full current energization or non-energization defines the difference between adjacent servo tracks or motor detent positions, said energization being accomplished with approximately one-half the full current energization of each coil of said motor, the motor thereby moving the transducer to a data track position midway between the servo tracks.

The arrangement may also include means for providing a fixed offset signal to said one selected coil of said motor for aligning said transducer over said data track centerline position, means for detecting said servo data burst recorded on data tracks on either side of said centerline, current means for generating an offset signal from said servo burst data representing the offset of said transducer from the data track centerline, and modulating means responsive to said circuit means for modifying the one-half current signal applied to said coil with said offset signal to center the transducer over the data track.

In any of the above arrangements said stepper motor may comprise a plurality of star-connected stator windings, a rotor coupled to said actuator in said disc drive for positioning said actuator in response to changes in the current flowing in said windings, and a control circuit means connected to one end of each of said windings for controlling the current flow in said windings for positioning said motor and thereby said actuator comprising a pair of bipolar transistors having a common connection coupled to said one end of each of said windings, said transistors being connected between a voltage source and ground, and responsive to control signals applied to the bases of said transistors to selectively connect pairs of said windings between said voltage source and said ground whereby the direction of current flow in said windings to position said motor is controlled.

This following is a description of some specific embodiments of the invention reference being made to the accompanying drawings in which:
FIG 1 is a circuit diagram of the motor;
FIG 2 is a diagram of the format position achieved using the bipolar drive control circuit of this invention;
FIG 3 is a table showing the switching pattern for the 20 step per 360 electrical degree motor;
FIG 4 is a diagram showing the positions achieved by energizing the differing windings of the motor with currents of different polarities, and the relative positions of the centers of the data tracks;
FIG 5 is a table showing which phases are energized to reach a particular track, and the manner in which the head is positioned between the two detent positions of the motor;
FIG 6 shows the relative positions of the odd/even and sync/burst in sectors on the data disc;
FIG 7 is an expanded view of one of the sectors shown in FIG 6 illustrating the relative placement of odd/even and sync/burst;
FIG 8 is a diagram of the electronics used to position the carriage by driving the 10-phase stepper motor; and
FIG 9 is a detailed schematic of a driver stage used to convey the signals from the outputs of the circuit shown in FIG 8 to the motor windings.
Fig 10 is a schematic illustration of the essential elements of a disc drive actuator positionable using this invention.

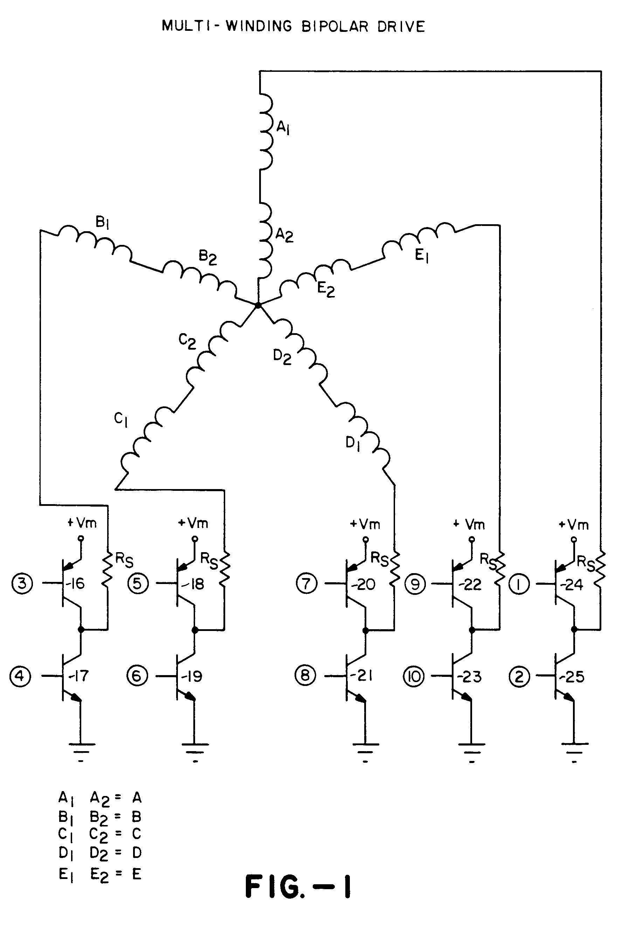

Referring to FIG 1, this shows a 10-phase motor having windings or stator coils A-E, each formed of two windings connected in series. Thus, as noted at the bottom of FIG 1, windings A1 and A2 are connected in series to form stator coil A, and so on. The coils are star connected at a common junction point 12. Leads 14 at the opposite end of each pair of windings are lead out to control transistors 16-26.

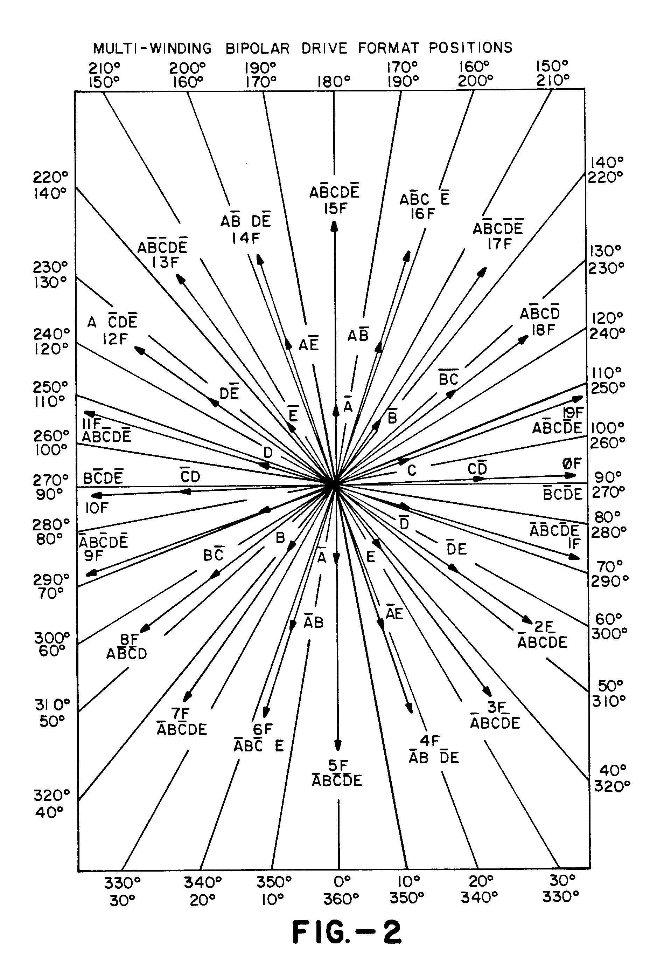

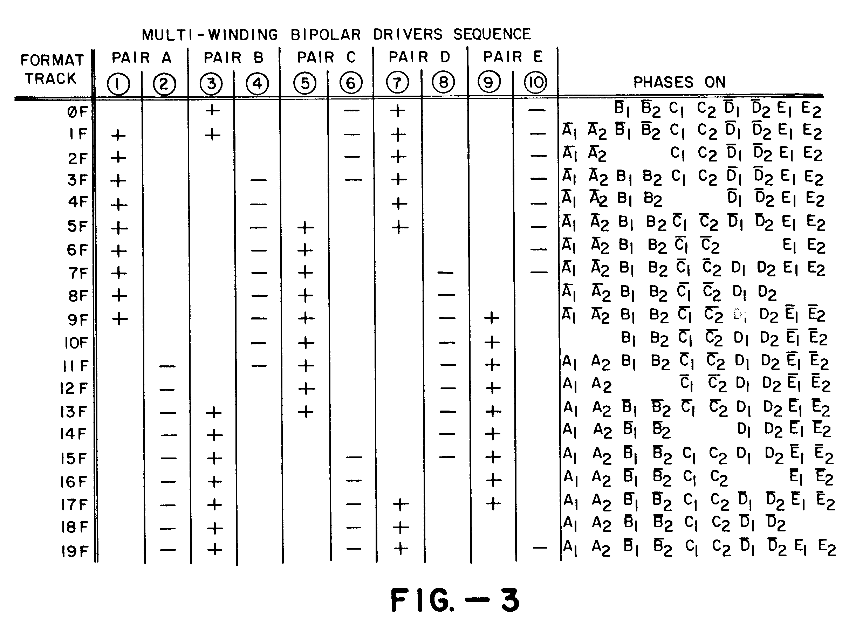

A rotor (not shown) carries a diametrically magnetized permanent magnet having poles N and S. As the windings are energized in accordance with the diagram shown in FIG 3, the magnetic field of the stator is rotated, causing rotation of the rotor. The rotor seeks to realign itself with each new position of the magnetic vector formed by the selective energization of the stator coils. The switching pattern that causes the magnetic field to move and the rotor to rotate, is shown in FIG 3. The net result of this sequence of energization is to produce a 20-step vector diagram as illustrated in FIG 2. The phase positions are achieved using a half-step scheme of four phases on, then five phases on, then four phases, repeating this over 360 electrical degrees. The result is to produce 20 steps of the stepper motor for each 360 electrical degrees.

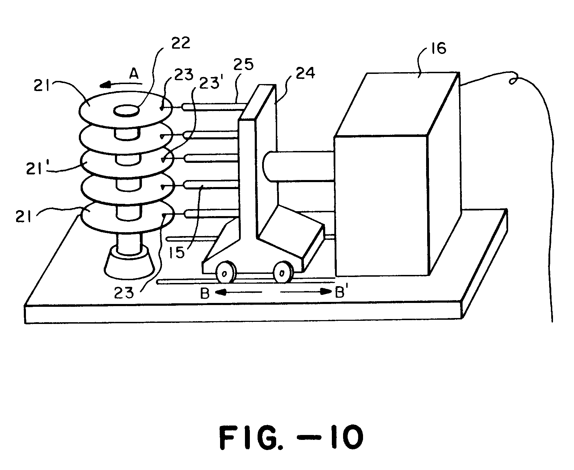

FIG 10 is a schematic illustration of the type of disc drive the present motor and servo control system might use. The reference number 21 refers to discs for storing data. The stack of discs 21 is fixed on a rotating shaft 22 rotated in the direction of arrow A by an electric motor (not shown) at a constant high speed. A plurality of transducers 23 are provided cooperating with the disc to read and write data on the tracks on the discs. The transducers 23 are supported by a carriage 24 by means of arms 25, the transducers being moved by the carriage 24 forward and backward in the direction of the arrows B and B'. Accordingly, the transducers 23 travel in a radial direction relative to and slightly above the corresponding magnetic discs 21. This movement of the transducers is accomplished by a motor of the type described in FIG 1 under control of signals applied through the bipolar transistors 16-25 shown at the bottom of FIG 1.

In order to generate a torque in the rotor of the motor of FIG 1, it is principally necessary that the voltages at the input points of the stator windings A, B, C, D, E have different polarities with respect to one another. By appropriate variation of the polarity of the voltages at the individual input lines 14, the rotor is driven by an electrical field that rotates in a predetermined direction. By applying voltages according to the sequence shown in FIG 3, the rotor will rotate through 20 separate steps in the manner shown, to step the transducers from track to track across the surface of the disc. It can be seen by reviewing the sequence listed under PHASES ON that the current applied through only one coil at a time is changed by the control circuit, thereby alternating five or four phases on.

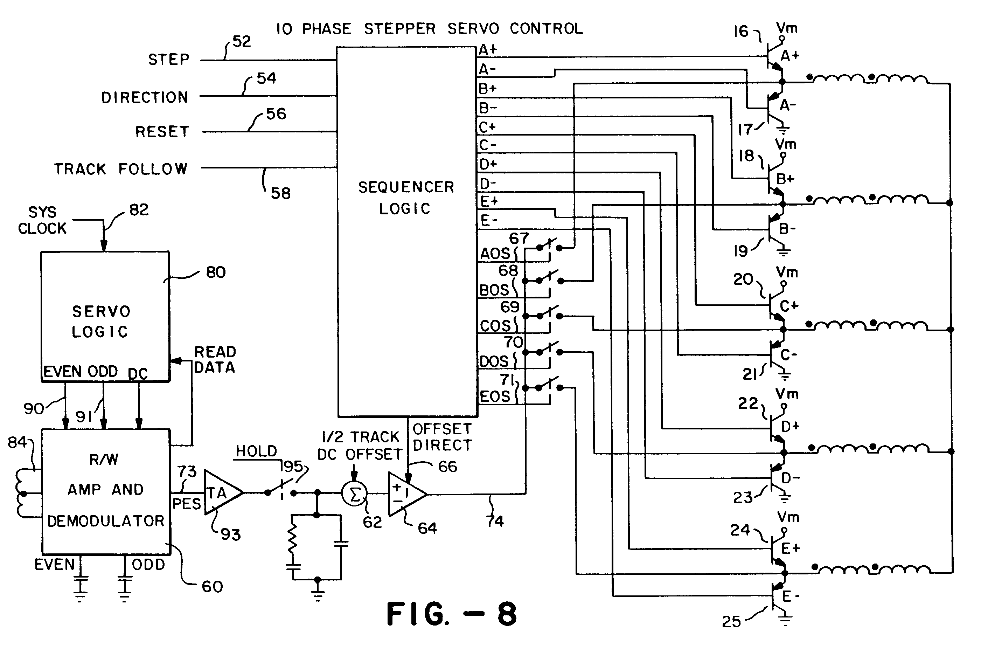

Thus, for example, taking the output end of coil pair A which is connected through line 14A to the junction of bipolar transistors 24 and 25, the transistor 24 is connected to a positive voltage source VM. This positive voltage is connected through a coil A, and then must flow out through another coil to ground. Thus, for example, transistor 24 would be turned on to connect the positive motor voltage to coil A and transistor 17 would be turned on to complete a circuit through coil a to ground. Thus, by turning on two transistors, 17, 24, both coils A and B are energized. These transistors 16-25 are energized according to the table shown in FIG 3 using sequencer logic shown in FIG 8 implemented in a manner which is well known to a person of skill in this technology.

For example, to implement the coil energization pattern necessary to reach format track 13F, transistor 24 would be off, transistor 25 would be on to connect coil A to ground, transistor 16 would be on to connect coil B to + voltage, transistor 17 would be off, transistor 18 would be on to connect coil C to plus voltage, transistor 19 would be off, transistor 20 would be off, transistor 21 would be on to connect coil D to ground, transistor 22 would be on to connect coil E to + voltage, and transistor 23 would be off. It should also be noted that this is a five-phase on position whereas, in the next adjacent track 14F, the only change made is that transistor 18 is turned off so that now only four phases are on and the rotor moves to the next track position. The prime difference between reaching track 13F and 14F is that to reach track 14F, coil C has no current flow.

FIG 2 represents one sequence of 360 electrical degrees (not mechanical degrees) for the motor. The motor repeats this electrical sequence every 360 electrical degrees or, in this case every 20 steps. In a typical embodiment, the motor actually makes 1,060 steps across the surface of the disc. Therefore, the pattern in FIG 2 repeats 53 times in moving the transducer read/write head completely across the surface of the disc. FIG 2 is the electrical angle plot showing the phases energized to reach tracks OF through 19F. Having reached track 19F, the next track would be 20F, reached by energizing the same phases as used to reach track OF, and then the sequence would continue up to 1,060.

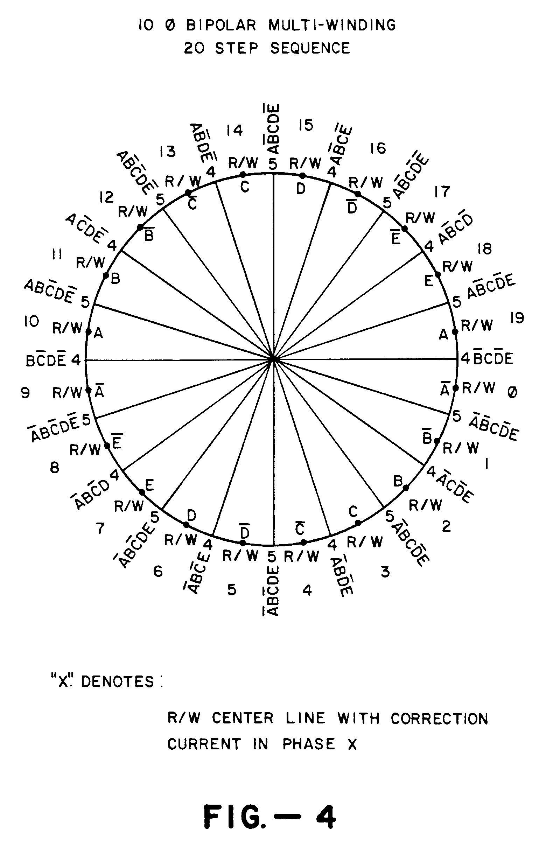

It is important to compare FIG 4 and FIG 2 to understand the exact actual positioning of the read/write head over a data track. Thus, comparing the chart AB CDE with the next adjacent set AB CE, it can be seen that the difference is that no current is flowing in coil D, causing movement of the motor rotor and attached carriage and transducer to the next detent position. According to this invention, as will be explained further below, servo burst information is recorded directly on the detent step positions of the motor represented by these two sets of coils being energized. The actual track on which data is written is 1/2 the distance between these two detent steps. This half track position is reached by putting half current into the coil in which current would otherwise not be flowing. Thus, to reach the track marked 15RW on FIG 4, 1/2 current would be applied to coil D to move the carriage and the transducer head it carries 1/2 step to the center of the read/write track.

As will be explained in further detail below, at the same time the head is moving to this half track position, servo information is read from the two adjoining servo tracks on either side of the read/write track so that by operating on this servo data, contemporaneously with the actual positioning of the transducer head over the track, a highly exact positioning of the read/write head over the center of the data track can be achieved.

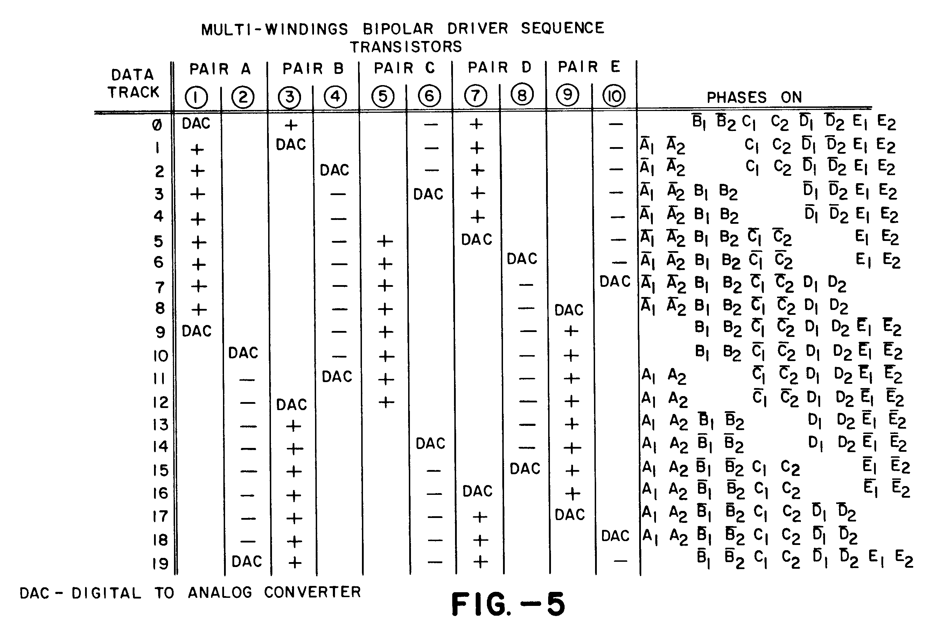

The 1/2 coil current, modified as required by the servo information being read from the detent positioning tracks on either side, is applied under the control of a digital to analog converter (DAC) as shown in the coil energization sequence spelled out in FIG 5. This figure differs from FIG 3 in that it can be seen that under the list of phases on, one phase is always shown as not receiving full current. This coil, receiving a servo-signal-modulated 1/2 current accurately positions the read/write head over the data track.

The present scheme achieves much of its accuracy because of the fact that the stopper motor detent positions are highly accurate. Thus, by writing servo information on these detent positions and modifying the current into the positioning coil in accord with the servo data read, the head can be moved with great accuracy to a position where the servo bursts being road from two successive motor detent positions are exactly balanced. If the opposite approach were taken, and the read/write positions coincided with the stopper motor detent positions, then the servo data would have to be written on either side of those detent positions, which is extremely difficult to accurately accomplish on a repetitive basis.

A further significant achievement of this invention is that it achieves 20 steps per electrical revolution, although using only 10 drive transistors, as shown in FIG 1, and only five stepper motor leads and five series resistors, one to each node. Thus, the control circuit for this invention, which is now to be explained in detail, is dramatically simplified from that appearing in prior motor control circuits.

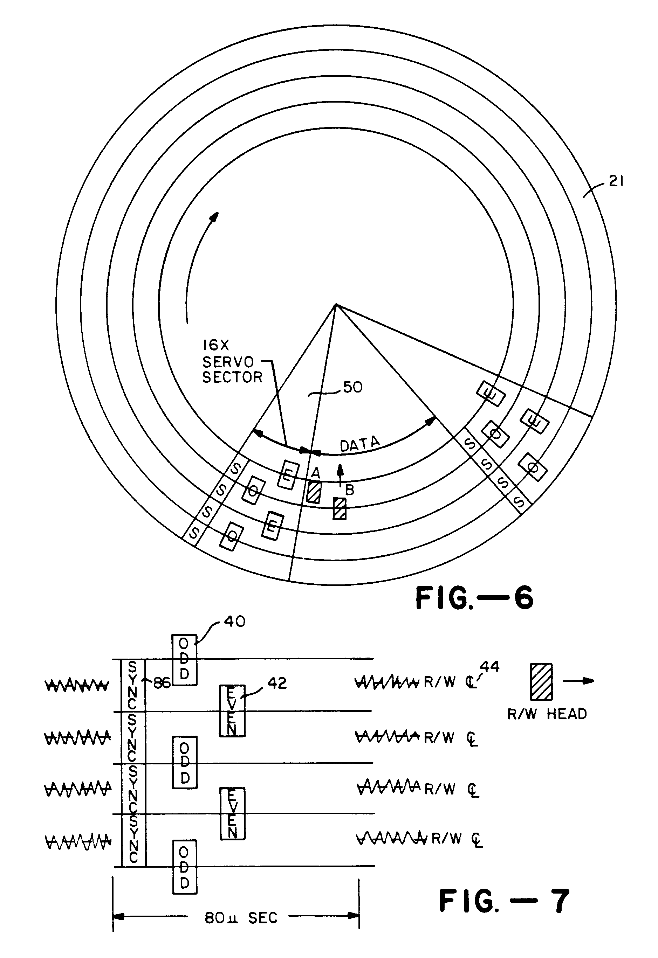

The general arrangement of servo data on one of the data discs 21 appears in FIG 6, and in greater detail in FIG 7. The ODD 40 and EVEN 42 servo bursts are recorded on detent positions reached by turning on either four or five coils in the motor. The SYNC bursts are recorded on the centerlines 44 where the data is read and recorded. It can be seen from FIG 6 that a number of servo sectors (in this preferred embodiment 16 in number) are recorded in regularly spaced circumferential positions on the surface of each data disc. Each of these servo sectors has alternating ODD and EVEN servo bursts recorded on the motor detent positions and SYNC bursts recorded on the read/write centerlines. These servo bursts 40, 42 are each 80 microseconds long and consist of a SYNC burst, ODD burst and EVEN burst. Thus, in the operation of moving a transducer head to the centerline of a read/write track, the coils are sequentially energized according to the format shown in FIG 3, using a course seeking mode to one of the detent positions, and then a closed loop servo control positioning of the head exactly over the center of a data track.

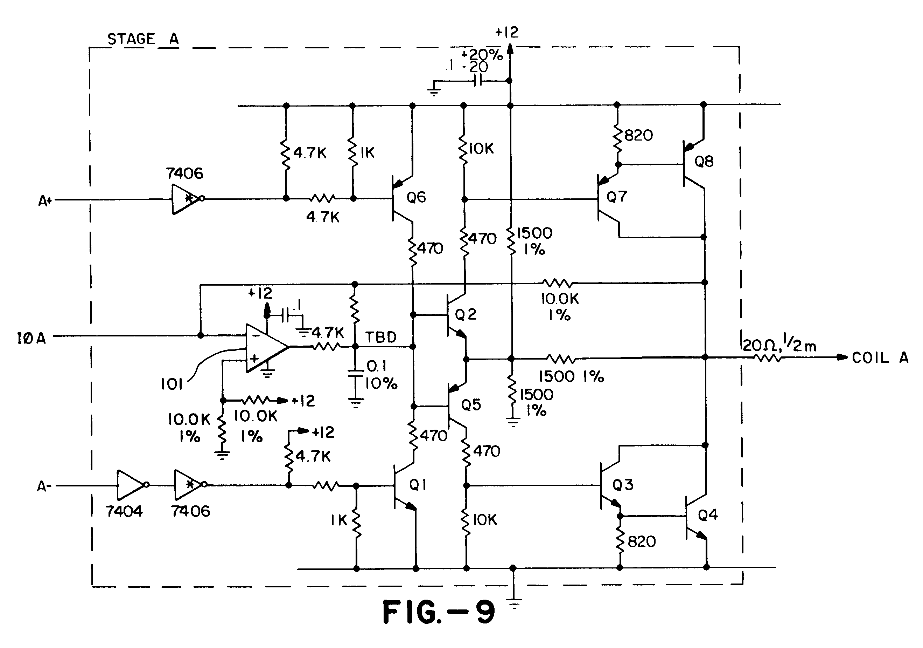

As is shown in FIG 6, 16 of these servo sectors containing odd/even and synchro data are recorded around the circumference of each data disc 21. Thus, as the disc 21 continuously rotates at high speed, the read/write head can continuously read the odd/even servo bursts and operate on this information to exactly position the head over the center of the read/write track by modulation of the half current signal applied to the unenergized coil. The details of the control circuit used to position the stepper motor by driving the coils are shown in FIG 8 with the output stages which actually drive the coil with the modulated or half current to position the head in response to the servo signal, shown in FIG 9.

The sequencer logic 50, designed in accordance with technology well known in the art, is programmed simply to follow the format set forth in FIG 5, in response to the four control signals received from a controlling microprocessor on lines 52, 54, 56, 58 to apply either 12 volts or ground to the base of each of transistors 60-25, and thereby apply the appropriate voltages to each of the five coils. The result of this arrangement is that to achieve final positioning of a transducer over a read/write track, either 12 volts or ground is being applied to four of the five phases A, B, C, D, E, with a modulated half current signal being applied through a driver circuit to the fifth coil.

Once the addressed track is reached, the TRACK FOLLOW signal changes state and the odd/even servo bursts 40, 42 are read by the read/write amp and demodulator 60 of FIG 8, and added to the half track DC offset signal at summer 62. The direction of the offset is established at inverter 64 by a control signal on line 66 from the sequencer logic 50. The coil to which the signal is to be applied is defined by one of the control signals A0S-EOS appearing on lines 67, 68, 69, 70 or 71 to control the switches 72. Thus, the voltage applied to a selected one of the coils as the output from demodulator 60 plus the DC track offset which is carried to the coil through line 74 accounts for the fact that the actual read/write centerline at which the head is to be positioned must be reached by balancing the odd/even servo data. By using a fixed DC offset 66 to account for half-track positioning, the servo signal being generated on line 73 only needs to account for the small deviation from the exact half track center between the two motor detent positions, and not for the full one-half track offset from the next adjacent motor detent.

More specifically, the servo logic 80 is controlled by the system clock 82 to detect when the head has completed its course seek to roughly the position between the two motor detent position which define the opposite sides of the read/write track centerline. The read/write amplifier 60 via coils 84 then looks for the SYNC burst 86 which in recorded on the center of each read/write track centerline. On detection of the SYNC burst, the servo logic 80 opens gate line 90, 91 to activate a standard circuit within the read/write amplifier modulator 60 which can detect the odd/even servo burst 40, 42 and generate a signal through amplifier 93, which represents the offset necessary to modulate the standard half track DC offset at summer 62 to provide an accurate positioning signal to the appropriate coil on line 74.

The output on line 73 represents the difference in amplitude between the ODD and EVEN servo bursts 40, 42 as the 16 servo sectors 50 continuously rotate past the read/write transducer head. When the read/write head is exactly centered on the centerline, the output on line 73 from the read/write demodulator is 0. If there is any offset from the read/write track centerline, then a positive or negative voltage representing that offset appears on line 73. Thus, for example, referring back to FIG 6, if the read/write head is in position A and centered between the tracks of odd and even servo data, the output signal on line 73 would be balanced. However, if it were in position D and offset toward one servo track or the other, the servo signal would be created on line 73 to drive the head back toward the center position. It should also be noted and can be discovered from a close review of FIG 5 that the signal is always applied to a phase that is not receiving any other signal as an output from the sequencer logic. Thus, if the head has been moved to a detent position defined by having four phases on, the output on line 74 is simply coupled to the fifth phase. However, if the head was moved to a detent position defined by five phases, then one phase is shut off as far as receiving a signal output from the sequencer logic, and then receives a signal on line 74.

The seeking from the motor detent position to the actual track center line occurs when the TRACK FOLLOW signal on line 58 goes low, closing the switch 95 in line 73, and also causing the appropriate one of the switches 72 to be closed to apply the modulated half track DC offset signal to be applied to one coil.

The stage A shown in FIG 9 is to show the signals that normally drive the coils as taken from transistors Q4 and Q8. In the normal operation of track seeking, these two transistors override the op amp 101 that appears on the left-hand side of the stage.

In the track follow mode, transistors Q4 and Q8 are shut off, and the control signal indicated as the signal to coil A now becomes the output from the operational amplifier 101.

## Claims

1. A disc drive system comprising a data storage medium in the form of a disc (21) having a plurality of data storage tracks, each one of said tracks having a centerline (44), the centerlines (44) of adjacent tracks being spaced a fixed track space distance, said medium further including servo sectors and servo data in said sector including a plurality of first servo data bursts (40) stored at a position on one side of said data track centerline and one-half said track space distance from said centerline, and a plurality of second servo data bursts (42) stored at the other side of said data track centerline and one-half of said track space distance from said centerline, positionable access means (23) for reading said servo tracks and said data tracks and for generating servo signals representing said first and second servo data bursts, said access means including a transducer for accessing said servo and data information, and a motor driven actuator (25) for supporting and positioning said transducer;
characterised in that the drive motor for the actuator is a stepper motor (16) having a plurality of stator coils (A-E) subject to selective simultaneous energization at full current with currents of selected polarities of all or all but one or two of said coils for defining a plurality of motor detent positions, said servo data (40, 42) being located at positions defined by said motor detent positions, said data track being reached by said transducer (23) by applying approximately one-half of said full energization current amount to said one coil not energized to reach said motor detent servo track position, the motor detent position on the other side of said track centerline (44) being reached by energization of all said coils (A-E) with currents of selected polarities.

2. A disc drive system as claimed in Claim 1, characterised in that said servo data burst is recorded in wedge-shaped sectors (50) on the surface of said disc, said sectors including said first and second servo data bursts (40, 42).

3. A disc drive as claimed in Claim 2, characterised in that each said wedge-shaped sector (50) includes a synchronizing signal (86) at a leading edge of said sector relative to the direction of travel of said transducer and aligned with said data track centerline (44), said drive including control means for detecting said synchronizing signal (86) and for reading said first and second servo data bursts (40, 42) for positioning said transducer over said data track.

4. A disc drive as claimed in any of Claims 1 to 3, including means for simultaneously energizing all or all but one of said coils to move said motor to a selected one of said detent positions, and data track position control means for applying approximately one-half full current amount to the one of said coils which is not used to define a servo track detent position on one side of said data track, said one-half current positioning said transducer over said data track.

5. A disc drive as claimed in Claim 4, characterised in that said control means includes first means (84) for reading said servo data burst, and means (60) for modulating said one-half current into said coil in response to said servo burst read by said control means to centre said transducer over said data track.

6. A disc drive as claimed in Claim 5, characterised in that said control means includes means (84) for reading said servo information from two motor detent positions on opposite sides of said desired data track, said transducer being centered over said data track midway between said detent positions.

7. A disc drive as claimed in Claim 6, characterised in that said stepper motor comprises ten coils (A-E), adjacent detent positions of said stepper motor being reached by energizing said ten coils or eight of said coils, the data track position intermediate said adjacent detent positions being reached by energizing a single positioning coil whose full current energization or non-energization defines the difference between adjacent servo tracks or motor detent positions, said energization being accomplished with approximately one-half the full current energization of each coil of said motor, the motor thereby moving the transducer to a data track position midway between the servo tracks.

8. A disc drive as claimed in any of Claims 1 to 7, including means (67-71) for providing a fixed offset signal to said one selected coil of said motor for aligning said transducer over said data track centerline position, means (84) for detecting said servo data burst (40, 42) recorded on data tracks on either side of said centerline, current means (62, 64) for generating an offset signal from said servo burst data representing the offset of said transducer from the data track centerline, and modulating means (60) responsive to said circuit means for modifying the one-half current signal applied to said coil with said offset signal to center the transducer over the data track.

9. A disc drive as claimed in any of Claims 1 to 8, characterised in that said stepper motor comprises a plurality of star-connected stator windings (A-E), a rotor coupled to said actuator in said disc drive for positioning said actuator in response to changes in the current flowing in said windings, and a control circuit means (16-25) connected to one end of each of said windings for controlling the current flow in said windings for positioning said motor and thereby said actuator comprising a pair of bipolar transistors having a common connection coupled to said one end of each of said windings, said transistors being connected between a voltage source and ground, and responsive to control signals applied to the bases of said transistors to selectively connect pairs of said windings between said voltage source and said ground whereby the direction of current flow in said windings to position said motor is controlled.

10. A disc drive as claimed in Claim 9, characterised in that the disc surface includes a plurality of said wedge-shaped servo sectors regularly spaced around the circumference of the disc.

11. A disc drive as claimed in Claim 9, characterised in that said one-half of said full current signal is applied to an end of one of said windings for positioning the motor between detent positions and thereby the transducer over a data track.

12. A disc drive as claimed in Claim 11, characterised in that said modulating signal for modulating the half full current signal is applied to the same one of said windings for modifying the motor position and thereby exactly positioning the transducer over the track centerline.

## Patentansprüche

1. Plattenlaufwerksystem mit einem Datenspeichermedium in Form einer Platte (21) mit mehreren Datenspeicherspuren, von denen jede eine Mittellinie (44) aufweist, wobei die Mittellinien (44) nebeneinanderliegender Spuren einen festen Spurteilungsabstand aufweisen, und wobei das Medium weiter Servosektoren und Servodaten in den Sektoren aufweist mit mehreren ersten Servodatenimpulsen (40), die in einer Position auf einer Seite der Datenspur-Mittellinie und um den halben Spurteilungsabstand von dieser Mittellinie entfernt gespeichert sind, und mehrere zweite Servodatenimpulse (42) aufweist, die auf der anderen Seite der Datenspur-Mittellinie gespeichert und um den halben Spurteilungsabstand von dieser Mittellinie entfernt sind, und mit einer positionierbaren Zugriffseinrichtung (23) zum Lesen der Servospuren und der Datenspuren und zum Erzeugen von die ersten und zweiten Datenimpulse darstellenden Servosignalen, wobei die Zugriffseinrichtung einen Wandler zum Zugriff auf die Servo- und Dateninformation aufweist und mit einem motorgetriebenen Zugriffsarm (25) zum Tragen und Positionieren des Wandlers, dadurch **gekennzeichnet,**
daß der Antriebsmotor für den Zugriffsarm ein Schrittmotor (16) ist, mit einer Vielzahl von Ständerspulen (A-E), die selektiver, gleichzeitiger Speisung bei vollem Strom mit Strömen ausgewählter Polaritäten aller oder aller bis auf ein oder zwei der Spulen zur Definition einer Vielzahl von Motorrastposition ausgesetzt sind, wobei die Servodaten (40, 42) an durch die Motorrastpositionen definierten Positionen angeordnet sind, und wobei die Datenspur vom Wandler (23) erreicht wird, indem annähernd die Hälfte des vollen Speisestroms an die eine nicht gespeiste Spule angelegt wird, um die Motorrast-Servo-Spurposition zu erreichen, und wobei die Motorrastposition auf der anderen Seite der Spurmittellinie (44) erreicht wird, indem alle Spulen (A-E) mit Strömen ausgewählter Polaritäten gespeist werden.

2. Plattenlaufwerk nach Anspruch 1, dadurch gekennzeichnet, daß der Servodatenimpuls in keilförmigen Sektoren (50) auf der Oberfläche der Platte aufgezeichnet wird, wobei die Sektoren die ersten und zweiten Servodatenimpulse (40, 42) aufweisen.

3. Plattenlaufwerk nach Anspruch 2, dadurch gekennzeichnet, daß jeder keilförmige Sektor (50) in Bewegungsrichtung des Wandlers an seiner Vorderkante und fluchtend mit der Datenspur-Mittellinie (44) ein Synchronisiersignal (86) aufweist, wobei der Antrieb eine Steuereinrichtung zum Erfassen des Synchronisiersignals (86) und zum Lesen der ersten und zweiten Servodatenimpulse (40, 42) zur Positionierung des Wandlers über der Datenspur einschließt.

4. Plattenlaufwerksystem nach einem der Ansprüche 1 bis 3, mit einer Einrichtung zur gleichzeitigen Speisung aller oder aller bis auf eine der Spulen zur Bewegung des Motors an eine ausgewählte Rastposition, und mit Datenspur-Positionssteuereinrichtungen zum Anlegen von annähernd der Hälfte des vollen Stroms an die eine Spule, die nicht zur Definition einer Servospur-Rastposition auf einer Seite der Datenspur verwendet wird, wobei der halbe Strom den Wandler über der Datenspur positioniert.

5. Plattenlaufwerk nach Anspruch 4, dadurch gekennzeichnet, daß die Steuereinrichtung eine erste Einrichtung (84) zum Lesen des Servodatenimpulses aufweist und eine Einrichtung (60) zum Modulieren des halben Stroms in die Spule, ansprechend auf den von der Steuereinrichtung gelesene Servoimpuls, um den Wandler über der Datenspur zu zentrieren.

6. Plattenlaufwerk nach Anspruch 5, dadurch gekennzeichnet, daß die Steuereinrichtung eine Einrichtung (84) zum Lesen der Servoinformation von zwei Motorrastpositionen auf gegenüberliegenden Seiten der gewünschten Datenspur aufweist, wobei der Wandler über der Datenspur auf halbem Weg zwischen den Rastpositionen zentriert wird.

7. Plattenlaufwerk nach Anspruch 6, dadurch gekennzeichnet, daß der Schrittmotor zehn Spulen (A-E) aufweist, wobei nebeneinanderliegende Rastpositionen des Schrittmotors durch Speisen der zehn Spulen oder von acht dieser Spulen erreicht werden und die Datenspurposition zwischen den nebeneinanderliegenden Rastpositionen durch Speisen einer einzigen Positionierungsspule, deren volle Stromspeisung oder Nicht-Speisung die Differenz zwischen nebeneinanderliegenden Servospuren oder Motorrastpositionen definiert, erreicht wird, und wobei die Speisung mit annähernd der Hälfte der vollen Stromspeisung jeder Spule des Motors durchgeführt wird, wobei der Motor den Wandler an eine Datenspurposition auf halbem Weg zwischen den Servospuren bewegt.

8. Plattenlaufwerk nach einem der Ansprüche 1 bis 7, mit einer Einrichtung (67-71) zum Ausgeben eines festen Offset-Signals an die eine ausgewählte Spule des Motors zum Fluchten des Wandlers über der Datenspur-Mittellinienposition, einer Einrichtung (84) zum Erfassen des auf Datenspuren auf beiden Seiten der Mittellinie aufgezeichneten Servodatenimpulses (40, 42), Stromeinrichtungen (62, 64) zum Erzeugen eines Offset-Signals aus den den Offset des Wandlers von der Datenspur-Mittellinie darstellenden Servoimpulsdaten, und einer Moduliereinrichtung (60), die auf die Stromkreiseinrichtung anspricht zur Änderung des an die Spule mit dem Offset-Signal angelegten halben Stromsignals zur Zentrierung des Wandlers über der Datenspur.

9. Plattenlaufwerk nach einem der Ansprüche 1 bis 8, dadurch gekennzeichnet, daß der Schrittmotor mehrere sterngeschaltete Ständerwicklungen (A-E) aufweist, einen mit dem Zugriffsarm in dem Plattenlaufwerk gekoppelten Rotor zur Positionierung des Zugriffsarms auf Änderungen im Stromfluß in den Wicklungen, und eine Steuerkreiseinrichtung (16-25), die zur Steuerung des Stromflusses in den Wicklungen zur Positionierung des Motors und damit des Zugriffsarms mit einem Ende jeder Wicklung verbunden ist, mit zwei bipolaren Transistoren mit einer gemeinsamen, mit dem einen Ende jeder Wicklung gekoppelten Verbindung, wobei die Transistoren zwischen eine Spannungsquelle und Masse geschaltet sind und auf an die Basen der Transistoren angelegte Steuersignale derart ansprechen, daß gezielt Paare der Wicklungen zwischen die Spannungsquelle und Masse geschaltet werden, wobei die Richtung des Stromflusses in den Wicklungen zur Positionierung des Motors gesteuert wird.

10. Plattenlaufwerk nach Anspruch 9, dadurch gekennzeichnet, daß die Plattenoberfläche mehrere keilförmige Servosektoren in regelmäßigem Abstand um den Umfang der Platte aufweist.

11. Plattenlaufwerk nach Anspruch 9, dadurch gekennzeichnet, daß die Hälfte des vollen Stromsignals an ein Ende einer der Wicklungen zur Positionierung des Motors zwischen Rastpositionen und damit des Wandlers über einer Datenspur angelegt wird.

12. Plattenlaufwerk nach Anspruch 11, dadurch gekennzeichnet, daß das Moduliersignal zur Modulation des halben Vollstromsignals an die gleiche Wicklung zur Änderung der Motorposition und damit zur exakten Positionierung des Wandlers über der Spur-Mittellinie angelegt wird.

## Revendications

1. Système d'entraînement de disque, comprenant un support de mémorisation de données sous la forme d'un disque (21) qui a une pluralité de pistes de mémorisation de données, chacune des pistes ayant une ligne centrale (44), les lignes centrales (44) de pistes adjacentes étant écartées d'une distance fixe d'espace de piste, le support comportant en outre des secteurs de servocommande et des données de servocommande dans ledit secteur qui comporte une pluralité de premiers groupes de données de servocommande (40), mémorisés à une position d'un côté de la ligne centrale de piste de données et sur une moitié de la distance d'espace de piste à partir de la ligne centrale, et une pluralité de seconds groupes de données de servocommande (42) mémorisés de l'autre côté de la ligne centrale de piste de données et sur une moitié de la distance d'espace de piste à partir de ladite ligne centrale, des moyens d'accès positionnables (23) pour lire les pistes de servocommande et les pistes de données et pour produire des signaux de servocommande qui représentent les premiers et seconds groupes de données de servocommande, les moyens d'accès comportant un transducteur pour accéder aux informations de servocommande et de données, et pour supporter et positionner le transducteur un actionneur entraîné par moteur (25), caractérisé en ce que le moteur d'entraînement de l'actionneur est un moteur pas-à-pas (16) qui a une pluralité de bobinages de stator (A à E) soumis à une excitation sélective simultanée à plein courant par des courants de polarités choisies pour tous les bobinages ou pour tous sauf un ou deux afin de déterminer une pluralité de positions de calage de moteur, les données de servocommande (40, 42) étant situées à des positions déterminées par les positions de calage de moteur, la piste de données étant atteinte par le transducteur (23) en appliquant approximativement la moitié de la valeur totale de courant d'excitation audit un bobinage non excité pour atteindre la position de piste de servocommande de calage de moteur, la position de calage de moteur de l'autre côté de ladite ligne centrale de piste (44) étant atteinte par excitation de tous les bobinages (A à E) par des courants de polarités choisies.

2. Système d'entraînement de disque suivant la revendication 1, caractérisé en ce que le groupe de données de servocommande est enregistré dans des secteurs en forme de coin (50) sur la surface du disque, les secteurs comportant les premiers et seconds groupes de données (40, 42).

3. Entraînement de disque suivant la revendication 2, caractérisé en ce que chaque secteur en forme de coin (50) comporte un signal de synchronisation (86) sur le bord avant du secteur par rapport à la direction de déplacement du transducteur et aligné sur la ligne centrale de piste de données (44), l'entraînement comportant les moyens de commande pour détecter le signal de synchronisation (86) et pour lire les premiers et seconds groupes de données de servocommande (40, 42) afin de positionner le transducteur sur ladite piste de données.

4. Entraînement de disque suivant l'une quelconque des revendications 1 à 3, caractérisé en ce qu'il comporte des moyens pour l'excitation simultanée de tous les bobinages ou de tous sauf un des bobinages, afin de déplacer le moteur jusqu'à une position choisie parmi les positions de calage, et des moyens de commande de position de piste de données afin d'appliquer approximativement la moitié de la pleine valeur de courant audit un des bobinages qui n'est pas utilisé, afin de déterminer une position de calage de piste de servocommande d'un côté de la piste de données susdite, ladite moitié du courant positionnant le transducteur sur la piste de données.

5. Entraînement de disque suivant la revendication 4, caractérisé en ce que les moyens de commande comportent des premiers moyens (84) pour lire le groupe de données de servocommande et des moyens (60) pour moduler ladite moitié de courant dans le bobinage en réponse au groupe de servocommande lu par les moyens de commande, pour centrer le transducteur sur ladite piste de données.

6. Entraînement de disque suivant la revendication 5, caractérisé en ce que les moyens de commande comportent des moyens (84) pour lire les informations de servocommande susdites à partir de deux positions de calage du moteur sur deux côtés opposés de la piste de données souhaitée, le transducteur étant centré sur ladite piste de données, à mi-chemin entre lesdites positions de calage.

7. Entraînement de disque suivant la revendication 6, caractérisé en ce que le moteur pas-à-pas comprend dix bobinages (A à E), des positions de calage adjacentes du moteur pas-à-pas étant atteintes en excitant les dix bobinages ou huit des bobinages, la position de piste de données entre les positions adjacentes de calage susdites étant atteintes en excitant un seul bobinage de positionnement dont l'excitation à plein courant ou la non excitation détermine la différence entre des pistes de servocommande adjacentes ou des positions de calage du moteur, ladite excitation étant réalisée avec approximativement la moitié de l'excitation à plein courant de chaque bobinage du moteur, le moteur déplaçant par cela le transducteur jusqu'à une position de piste de données à mi-chemin entre les pistes de servocommande.

8. Entraînement de disque suivant l'une quelconque des revendications 1 à 7, caractérisé en ce qu'il comporte des moyens (67 à 71) pour procurer un signal décalé fixe audit un bobinage choisi du moteur, afin d'aligner le transducteur sur la position de ligne centrale de la piste de données, des moyens (84) de détection du groupe de données de servocommande (40, 42) enregistré sur des pistes de données de chaque côté de la ligne centrale, des moyens à courant (62, 64) pour produire un signal décalé à partir des données de groupe de servocommande qui représente le décalage du transducteur à partir de la ligne centrale de piste de données, et des moyens de modulation (60) qui répondent auxdits moyens de circuit afin de modifier par le signal décalé la moitié du signal de courant appliquée audit bobinage, pour centrer le transducteur sur la piste de données.

9. Entraînement de disque suivant l'une quelconque des revendications 1 à 8, caractérisé en ce que le moteur pas-à-pas comporte une pluralité d'enroulements de stator raccordés en étoile (A à E), un rotor couplé à l'actionneur, dans l'entraînement de disque susdit, afin de positionner ledit actionneur en réponse à des changements du courant s'écoulant dans les enroulements, et des moyens de circuit de commande (16 à 25) qui sont raccordés à une extrémité de chacun desdits enroulements afin de commander l'écoulement du courant dans les enroulements pour positionner le moteur et par cela l'actionneur, qui comprennent une paire de transistors bipolaires qui ont un raccordement commun couplé à ladite une extrémité de chacun des enroulements, les transistors étant raccordés entre une source de tension et la masse, et qui répondent à des signaux de commande appliqués aux bases desdits transistors pour raccorder sélectivement des paires d'enroulements susdits entre la source de tension et la masse, le sens d'écoulement du courant dans les enroulements susdits pour positionner le moteur étant commandé par cela.

10. Entraînement de disque suivant la revendication 9, caractérisé en ce que la surface de disque comporte une pluralité de secteurs de servocommande en forme de coin qui sont espacés régulièrement autour de la circonférence du disque.

11. Entraînement de disque suivant la revendication 9, caractérisé en ce que ladite moitié du signal de plein courant est appliquée à une extrémité d'un des enroulements afin de positionner le moteur entre des positions de calage et par cela le transducteur sur une piste de données.

12. Entraînement de disque suivant la revendication 11, caractérisé en ce que le signal de modulation susdit pour moduler la moitié du signal de plein courant est appliqué au même un enroulement des enroulements susdits afin de modifier la position du moteur et de positionner exactement par cela le transducteur sur la ligne centrale de piste.
